# FASCICULE DE BREVET EUROPEEN

(11) **EP 4 526 749 B1**
(45) Date de publication et mention de la délivrance du brevet: **01.07.2026**
(21) Numéro de dépôt: 23727826.2
(22) Date de dépôt: 15.05.2023
(51) Int. Cl.: G05D 1/00, A01B 69/04

(54) **PROCEDE ET INSTALLATION DE TRAVAIL D'UNE PARCELLE AVEC AU MOINS DEUX ROBOTS AGRICOLES**
VERFAHREN UND ANLAGE ZUR BEARBEITUNG EINER LANDPARZELLE MIT MINDESTENS ZWEI LANDWIRTSCHAFTLICHEN ROBOTERN
METHOD AND FACILITY FOR WORKING A PLOT OF LAND WITH AT LEAST TWO AGRICULTURAL ROBOTS

(30) Priorité: 16.05.2022 FR 2204629
(43) Date de publication de la demande: 26.03.2025
(73) Titulaire: Kuhn SAS, 67700 Saverne (FR)
(72) Inventeur: HOELLINGER, Marie, 57720 RIMLING (FR); POTIER, Philippe, 67290 ZITTERSHEIM (FR)
(86) Numéro de dépôt international: PCT/EP2023/062908
(87) Numéro de publication internationale: WO 2023/222573

(56) Documents cités:
- WO-A1-2018/163615
- JP-A- 2020 018 262
- JP-B2- 6 854 847

## Description

La présente invention concerne le domaine du machinisme agricole et plus particulièrement du travail du sol et/ou des végétaux d'une parcelle agricole par des machines agricoles autonomes à fonctionnement hautement automatisé, généralement dénommées engins agricoles robotisés ou robots agricoles, préférentiellement par une flotte d'au moins deux tels engins ou machines.

Dans ce contexte, l'invention a pour objet un procédé de travail d'une parcelle agricole par au moins deux robots agricoles avec traitement continu et complet par chaque robot de chaque zone de travail qui lui est affectée, ainsi qu'une installation agricole mettant en œuvre ce procédé.

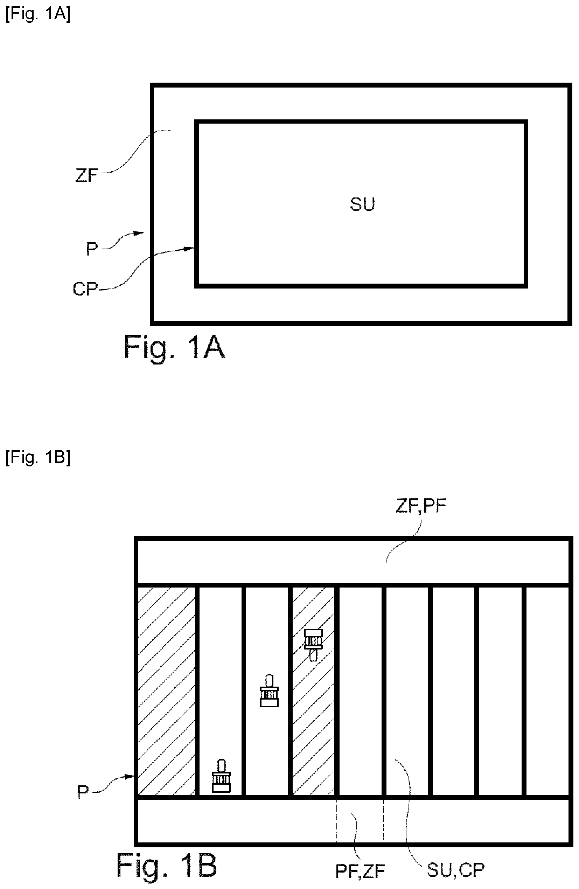

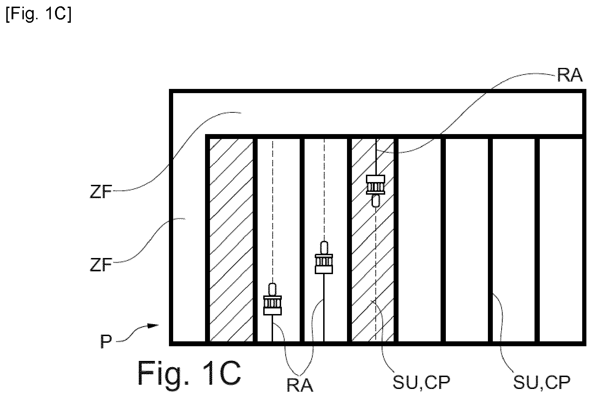

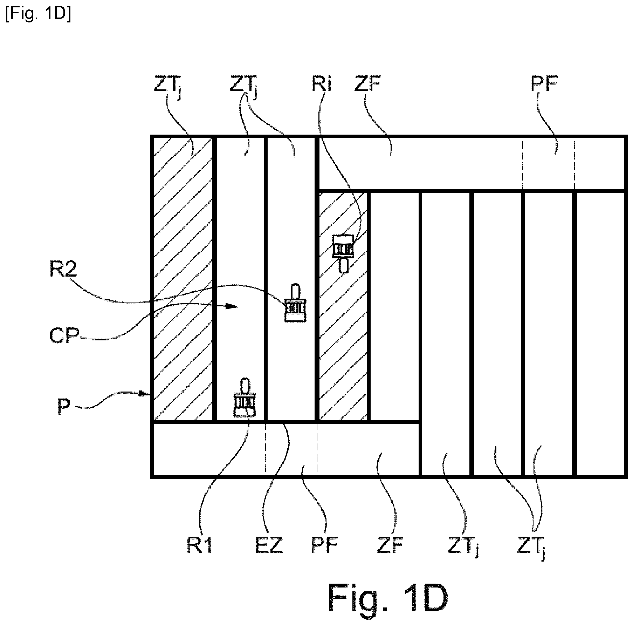

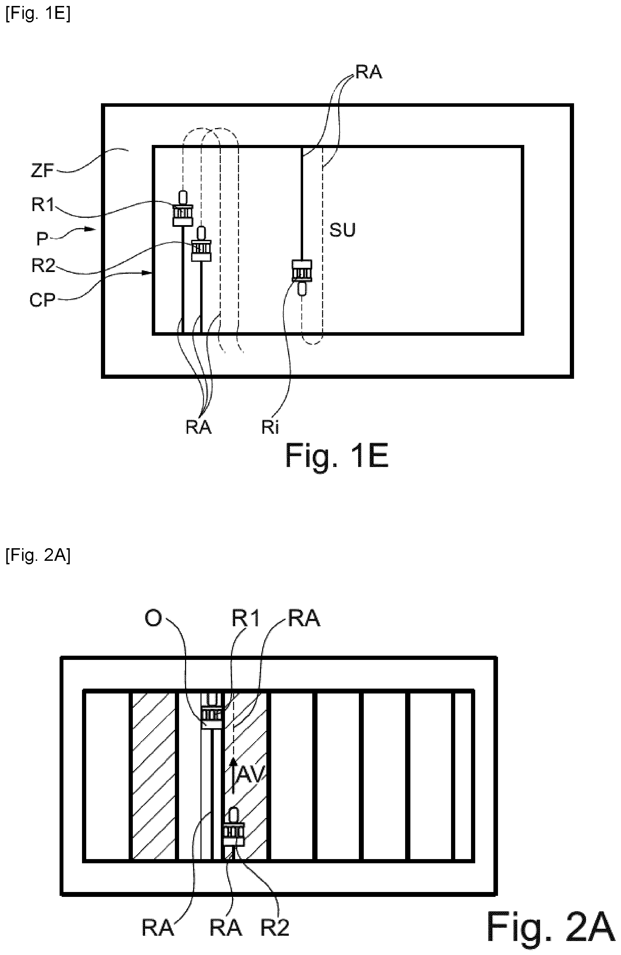

Typiquement, une parcelle agricole P (généralement de forme sensiblement rectangulaire, mais pouvant aussi être parallélépipédique quelconque) est divisée en un champ principal CP (correspondant à la surface utile SU exploitable optimalement) et au moins une zone de fourrière ZF qui borde ce champ principal sur toute ou partie de sa circonférence périphérique (voir figures 1A et 1E - fourrière sur tout le pourtour du champ CP). Cette zone de fourrière ZF peut être continue et bordant entièrement SU ou CP, comme dans la figure 1A : elle s'étend alors sur tous les côtés du champ principal. Elle peut aussi ne s'étendre que le long de certains côtés seulement du champ principal, voire sur un côté seulement, en étant fragmentée (comme dans la figure 1B) ou continue (voir figure 1C). Elle peut enfin également ne s'étendre que sur une partie d'un seul côté (voir figure 1D).

Une solution connue pour travailler le champ principal CP consiste à diviser celui-ci, comme le montrent les figures 1A à 1D, en zones de travail (ZTj, avec j variant de 2 à n) en forme de bandes (normalement de largeur fixe sur toute leur longueur, mais de largeurs éventuellement différentes entre elles) correspondant à la largeur de travail des robots agricoles mis en œuvre (chaque zone est travaillée en un passage ou rang RA par exemple) ou à un multiple (préférentiellement entier) de cette largeur (chaque zone est alors travaillée par le robot en un nombre pair ou impair de passages ou rangs RA), et d'affecter ou de pré-affecter ces zones aux différents robots, préférentiellement de manière exclusive (une zone est affectée exclusivement à un robot). Les trajectoires prévues et effectuées par les robots lors de leur travail dans ces zones sont appelées couramment « rangs ».

Les zones de travail précitées peuvent être affectées/réaffectées en temps réel en fonction de l'avancement des travaux en cours par les différents robots et de l'évolution de la situation au cours de la durée de traitement de la parcelle. Les zones de travail précitées, qui constituent des portions fractionnaires du champ principal, peuvent être attribuées (pour une phase ou mission de travail donnée d'une parcelle) soit exclusivement à un unique robot d'une flotte pour être travaillée par ce dernier, soit en variante à plusieurs robots qui la travaillent simultanément ou successivement, en effectuant des taches identiques ou similaires, ou encore différentes, voire complémentaires. Ces zones sont travaillées par les robots en effectuant avantageusement au moins un aller-retour dans chaque zone.

En variante et comme le montre la figure 1E, la surface utile SU (champ principal CP) peut aussi être travaillée sans faire appel à une subdivision en plusieurs zones de travail (autrement dit CP ou SU constitue une unique zone de travail non subdivisée, travaillée d'un seul bloc et simultanément par les différents robots), la gestion des robots s'effectuant alors sur la base des rangs RA réalisés par et prévus pour chaque robot (parties de rangs effectuées en traits pleins sur la figure 1E et 1C et parties de rangs à faire en traits pointillés sur ces figures.

De manière classique, une zone de fourrière est présente sur au moins un, avantageusement plusieurs, côté(s) du champ principal et préférentiellement au moins à chaque extrémité des zones de travail, et donc des rangs ou trajets de travail dans la parcelle. Elle est en premier lieu utilisée par les engins ou robots agricoles pour effectuer les demi-tours et plus généralement pour manœuvrer d'un rang à l'autre du champ principal, mais aussi pour entrer/sortir de la parcelle, ou pour aller se ravitailler en intrants ou en carburant auprès d'une station de ravitaillement positionnée dans une portion d'une zone de fourrière ou à l'extérieur de la parcelle (par exemple sur le bas-côté d'un chemin d'accès à la parcelle). Les zones de fourrière sont également travaillées, généralement en dernier, après toutes les zones de travail de la parcelle ou surface utile SU.

L'invention vise plus particulièrement un contexte dans lequel la gestion des déplacements est assurée par un logiciel/système de supervision qui connait à l'avance toutes les trajectoires (rangs) que les différents robots vont emprunter et qui connait également en temps réel les positions de chaque robot pendant le travail (les robots ne communiquent pas entre eux directement). L'invention trouve notamment application dans le contexte décrit dans les documents FR 3114215 et FR3114217, lorsque la surface utile est subdivisée en plusieurs zones de travail figures 1B à 1D, 2 et 3), mais est également applicable lorsque la surface utile n'est pas subdivisée (figures 1A et 1E).

Dans la majorité des cas, les robots sont (au moins) équipés d'outils disposés à l'arrière par rapport au sens d'avance pendant le travail.

Or, une telle configuration implique que pour travailler un rang ou une zone en totalité, c'est-à-dire complètement jusqu'au bout (limitrophe de la fourrière), il faut que le robot déborde de la zone en cours de travail ou de la surface utile, donc du champ principal, et se retrouve (au moins partiellement) dans la fourrière, pour que l'outil arrière atteigne la fin du rang et travaille la portion d'extrémité de la zone correspondante.

Il est bien connu de l'homme du métier, que la manière optimale de travailler un rang est de le travailler d'une seule traite, sans interruption du début à la fin.

En effet, selon le type d'opération agricole effectuée, une interruption peut impliquer un redémarrage de certains sous-systèmes des outils (doseurs de graines sur les semoirs par exemple). Ces sous-systèmes ne fonctionneront pas de manière optimale sur quelques mètres après un redémarrage, car ils ont besoin d'une certaine période pour retrouver le même réglage qu'avant leur interruption (fonctionnement courant). Ceci conduit donc à des portions de rangs, et le cas échéant des portions correspondantes de zones de travail, dans lesquelles le travail des outils sera hétérogène, voire inexistant, ce qui peut conduire à une perte de rendement agricole.

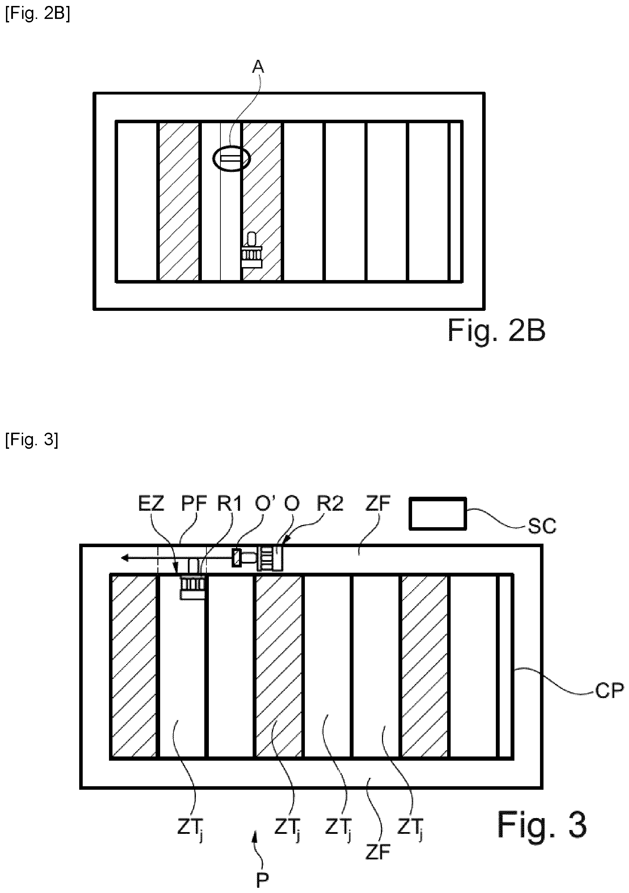

Cette situation est illustrée schématiquement à titre d'exemple par les figures 2A et 2B, dans lesquelles on peut relever que, à la suite d'une interruption du travail du robot R1 entrainant un arrêt à la position illustrée sur la figure 2A, une portion de la zone de travail concernée (encerclée et référencée A) aura été travaillée de manière différente par rapport au reste de la zone, après la reprise (voire pas travaillée du tout).

Un arrêt momentané du travail vers la fin d'un rang est souvent le résultat d'une situation d'attente du robot concerné pouvant découler de différentes causes.

Une cause fréquente, dans le cas du travail d'une parcelle avec au moins deux robots agricoles, réside dans la gêne problématique que peut occasionner un premier robot R1 en voulant finir totalement son rang en cours par rapport à un second robot R2 passant à ce moment-là dans la portion de fourrière limitrophe.

Ainsi, dans le cas illustré à titre d'exemple schématiquement par la figure 3, le robot R1 finit son rang et est obligé de déborder dans la fourrière pour que l'outil arrière puisse travailler la portion d'extrémité de la zone correspondante. Or, il se trouve que le robot R2 doit au même moment emprunter la portion de la fourrière occupée par le robot R1 pour se déplacer dans la parcelle (par exemple à cause d'un ravitaillement, ou pour se déplacer vers une nouvelle zone à travailler). Les robots R1 et R2 se bloquent donc mutuellement, ce qui nécessite de mettre en place des moyens de gestion de priorité et de sécurité (logique de gestion de conflits) pour empêcher les collisions et les blocages, en particulier dans ce type de situations. Bien que de tels moyens soient forcément nécessaires dans une infrastructure de travail agricole robotisée à plusieurs engins, il existe une demande forte pour tenter de limiter au maximum les situations de ce genre, de manière à faciliter le plus possible la gestion des collisions, des croisements et des priorités entre robots, et de fluidifier le travail des parcelles.

Ce problème est notamment abordé dans le document EP 3508045, qui propose comme évoqué ci-dessus un arrêt temporaire du robot dans la zone travaillée en fin de rang (pour laisser passer le second robot dans la portion de fourrière critique). Il est aussi fait état d'une interdiction temporaire de travail de certains rangs dont l'accès est gêné par un robot à l'arrêt dans la fourrière.

En outre, par le document EP 3427562, on connait un procédé dans lequel le robot en déplacement dans la fourrière est, pour éviter une possible collision, arrêté dans cette dernière, afin de laisser passer un robot effectuant son demi-tour dans cette fourrière.

Alternativement, d'autres solutions connues existent dans les documents JP 6854847 B2, JP 2020018262 A1 et WO 2018/163615 A1. Le document JP 6854847 B2 ne dévoile pas, sur la figure 4, que le "déplacement en marche arrière" se situe "dans le champ principal, ce au moins jusqu'à ce que ledit robot et son(ses) outil(s) soient à nouveau situés en totalité dans ledit champ principal".

Toutefois, aucune de ces solutions connues ne répond de manière satisfaisante à la demande précitée.

La présente invention a notamment pour but principal de fournir une solution simple et satisfaisante permettant de répondre optimalement à la demande précitée.

A cet effet, l'invention a pour objet un procédé de travail d'une parcelle par l'intermédiaire d'une flotte d'au moins deux robots agricoles à fonctionnement autonome et mutuellement indépendants, et dont chacun est équipé d'au moins un outil disposé à l'arrière selon la direction d'avance, la flotte opérant sous le contrôle d'un système central commun de planification, de gestion et de pilotage, la parcelle comportant au moins une zone de fourrière associée à et bordant au moins une partie d'un côté du champ principal, le procédé consistant, préalablement au début, et éventuellement durant l'avancement du travail dans la parcelle, et après évaluation et planification préalables du travail à réaliser sur la parcelle considérée, à programmer automatiquement et/ou manuellement chaque robot avec des consignes, des paramétrages et/ou des séquences de commandes avant le démarrage du travail dans la parcelle, comprenant notamment des trajectoires de déplacement pour chacun d'entre eux,
procédé caractérisé en ce qu'il consiste, pour un robot concerné arrivant en fin de rang, et susceptible de se retrouver dans une situation d'attente, à continuer et à achever le travail en cours dans le champ principal dans son rang courant, en amenant son ou ses outil(s) jusqu'à la fin dudit rang et donc jusqu'à la partie bord concernée du champ principal, ce en débordant dans la partie de fourrière attenante à cette partie de bord, puis à effectuer un déplacement en marche arrière dans le champ principal, ce au moins jusqu'à ce que le robot et son(ses) outil(s) soient à nouveau situés en totalité dans le champ principal, à demeurer en place jusqu'à ce que les conditions ou la cause de la situation d'attente ai(ent) disparu et ensuite à reprendre la suite de son travail dans la parcelle (P).

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
[Fig. 4A],
[Fig. 4B],
[Fig. 4C],
[Fig. 4D] et
[Fig. 4E] illustrent schématiquement et similairement aux figures 2 et 3, en vues de dessus et en relation avec une flotte de deux robots, différentes étapes successives du procédé selon l'invention, correspondant aux actions réalisées par un robot agricole en cas de situation d'attente, en accord avec une logique prédéfinie de règles de priorité et de sécurité.

L'invention concerne de façon générale un procédé de travail d'une parcelle (P) par l'intermédiaire d'une flotte d'au moins deux robots agricoles (R1, R2, ..., Ri, ...) à fonctionnement autonome et mutuellement indépendants, et dont chacun est équipé d'au moins un outil (O) disposé à l'arrière selon la direction d'avance (AV). Cette flotte opère sous le contrôle d'un système central commun de planification, de gestion et de pilotage (SC), connu de l'homme du métier en tant que tel, et la parcelle (P) comporte au moins une zone de fourrière (ZF) associée à et bordant au moins une partie d'un côté de son champ principal (CP).

Ce procédé consiste, préalablement au début, et éventuellement aussi durant l'avancement du travail dans la parcelle (P), et après évaluation et planification préalables du travail à réaliser sur la parcelle (P) considérée, à programmer automatiquement et/ou manuellement chaque robot (R1, R2, ..., Ri, ...) avec des consignes, des paramétrages et/ou des séquences de commandes avant le démarrage du travail dans la parcelle (P), comprenant notamment des trajectoires de déplacement pour chacun d'entre eux (constituant les rangs dans le champ principal).

Conformément à l'invention, ce procédé consiste, pour un robot (Ri) concerné arrivant en fin de rang (RA), et susceptible de se retrouver dans une situation d'attente, à continuer et à achever le travail en cours dans le champ principal (CP) dans son rang (RA) courant, en amenant son ou ses outil(s) (O) jusqu'à la fin dudit rang (RA) et donc jusqu'à la partie bord (EZ) concernée du champ principal (CP), ce en débordant dans la partie (PF) de fourrière attenante à cette partie de bord (EZ), puis à effectuer un déplacement en marche arrière dans le champ principal (CP), ce au moins jusqu'à ce que le robot (Ri) et son(ses) outil(s) (O) soient à nouveau situés en totalité dans le champ principal (CP), à demeurer en place jusqu'à ce que les conditions ou la cause de la situation d'attente ai(ent) disparu et ensuite à reprendre la suite de son travail dans la parcelle (P).

Grâce à ces dispositions, l'invention permet de surmonter de manière simple et efficace la problématique liée à une situation d'attente pour un robot donné, ce sans impacter notablement, voire pas du tout, le fonctionnement de l'autre ou des autres robots : le robot concerné ne forme plus un obstacle dans la fourrière et peut néanmoins travailler le rang en cours de manière optimale. On comprend que l'invention peut s'appliquer dès qu'une fin de rang (RA) débouche sur partie de fourrière (PF), mais bien entendu ne s'applique pas systématiquement (seulement lorsque les conditions d'une situation d'attente sont réunies). L'invention permet donc de garantir un travail homogène sur toute la longueur du rang (RA) et ce pour tous les rangs (indépendamment de l'occurrence d'une situation d'attente), d'éviter les collisions dans les fourrières et de faciliter la gestion des croisements entre robots.

En accord avec une variante de réalisation avantageuse, à la fois flexible et sécurisée, la réalisation des conditions ou l'existence d'une cause entraînant une situation d'attente pour un robot (Ri) donné est vérifiée par ce même robot (Ri) lorsqu'il arrive en fin du rang en cours et approche d'une partie de fourrière (PF) attenante, et l'exécution consécutive par ce robot (Ri) d'actions en relation avec une situation d'attente avérée est tributaire de contrôles de sécurité préalables effectués par ce robot (Ri).

En accord avec une variante alternative, et en relation avec un contrôle centralisé poussé de la flotte et une possible sophistication limitée des robots, l'existence d'une situation d'attente pour un robot (Ri) donné est signalée à ce dernier par le système central commun de planification, de gestion et de pilotage (SC).

Pour limiter au maximum l'écrasement de cultures semées (travail de semis ou de traitement des plantes après semis), il est avantageusement prévu que le déplacement en marche arrière du robot (Ri) concerné emprunte, en sens inverse, la même trajectoire que celle empruntée pour achever le travail en fin de son rang (RA) courant.

Alternativement, et pour limiter le tassement du sol (pas de risque d'écrasement de semis ou de plantes, opérations de travail du sol telles que labour, déchaumage, passage de herse, ...), il peut être prévu que le déplacement en marche arrière du robot (Ri) concerné emprunte une trajectoire différente de celle empruntée pour achever le travail en fin de son rang (RA) courant, préférentiellement décalée latéralement au moins de la largeur de la trace d'un moyen de roulement dudit robot. Ainsi, les charges impactant le sol sont mieux réparties.

De manière préférée, le au moins un outil (O) est inactivé, le cas échéant soulevé, lors du déplacement en marche arrière du robot (Ri) concerné.

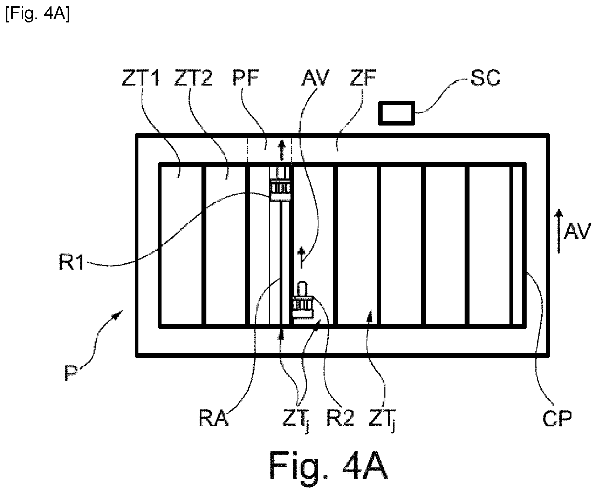

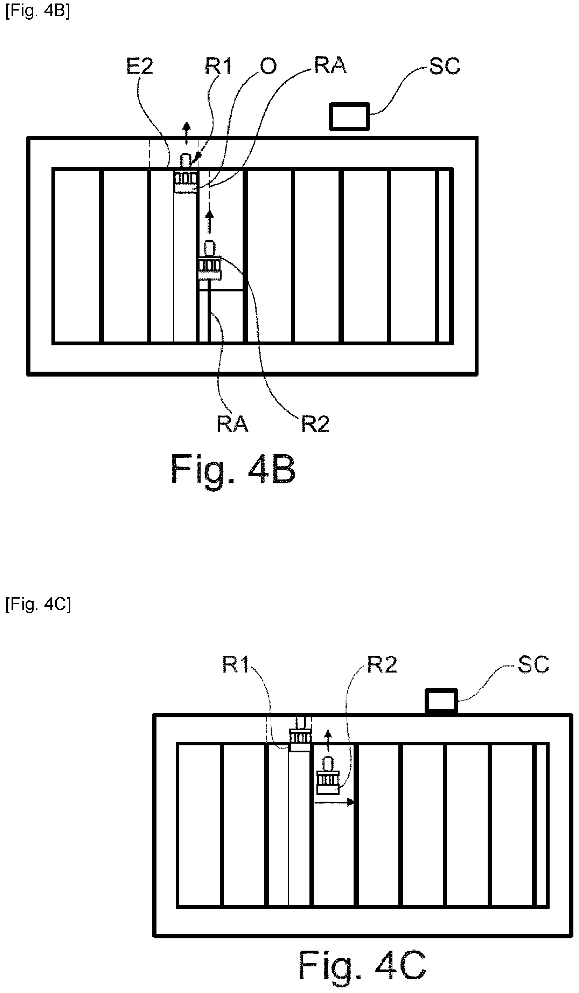

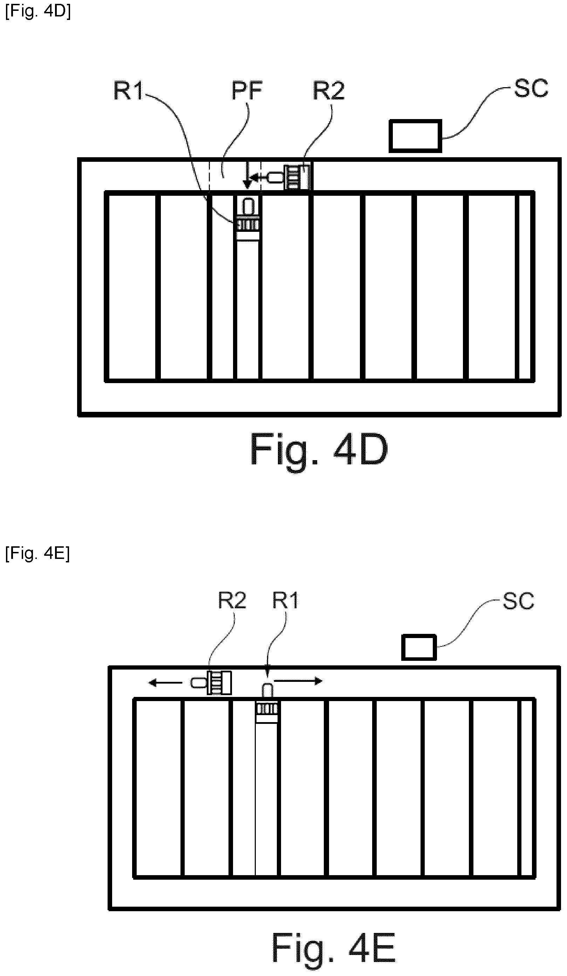

Conformément à un premier mode de réalisation, illustré par la figure 4 et en relation par exemple avec les procédés décrits dans les documents FR 3114215 et FR3114217, le procédé peut consister, préalablement au démarrage du travail dans la parcelle (P), et éventuellement durant l'avancement du travail dans la parcelle (P), à subdiviser le champ principal (CP) en zones de travail (ZT1, ZT2, ..., ZTj, ...) en forme de bandes, dont au moins une extrémité, qui correspond à une partie de bord (EZ) du champ principal (CP), se prolonge par une partie (PF) de la ou d'une des zone(s) de fourrière (ZF), et dont chacune est attribuée à un des robots (R1, R2, ..., Ri, ...) pour être travaillée par lui selon sa direction longitudinale en un ou plusieurs passage(s) ou rang(s), avantageusement en au moins un trajet aller-retour.

Conformément à un second mode de réalisation, et en relation avec une parcelle telle qu'illustrée sur la figure 1E, le champ principal (CP) n'est pas subdivisé, est considéré par le système et les robots comme une seule zone de travail, mais non exclusive et pouvant être travaillé simultanément par plusieurs ou tous les robots de la flotte (vigilance accrue des systèmes de sécurité pour éviter les collisions). Le parcours sera planifié avec les allers-retours nécessaires à chaque robot dans le champ principal de manière à le travailler dans sa totalité. Ces instructions seront ensuite envoyées par le système superviseur (SC) aux différents robots. La répartition du travail entre les robots dans cette zone unique se fait au moment de la génération des parcours et des instructions qui seront envoyées aux différents robots concernés.

Dans le cadre de ce second mode de réalisation, plusieurs scénarii de travail sont envisageables (ci-dessous illustré avec un exemple de flotte à trois robots Ri, avec i variant de 1 à 3):

- si opération agricole identique pour tous les robots dans le champ principal (CP) : dans ce cas-là, chaque robot évolue dans une partie de CP (par exemple lorsque deux robots sont présents pour travailler dans CP, alors on peut par exemple simplement attribuer la moitié gauche à l'un, et la moitié droite à l'autre).

- si opérations agricoles différentes et successives pour tous les robots dans le champ principal (CP) : tous les robots empruntent alors un parcours identique ou quasi-identique mais de manière décalée dans le temps (avec entre deux robots successifs un delta de X mètres/allers-retours/minutes), et ils travaillent tous la totalité du champ principal (CP). Exemple d'application pour une flotte de trois robots (i=1 à 3) : R1 met en œuvre un déchaumeur, R2 met en œuvre une herse rotative et R3 met en œuvre un semoir.

Lorsque le robot (Ri) concerné comporte également au moins un outil (O') disposé à l'avant, il est avantageusement prévu d'effectuer le déplacement en marche arrière dans le champ principal (CP), le cas échéant dans la zone de travail (ZTj) considérée, au moins jusqu'à ce que le au moins un outil (O') disposé à l'avant soit situé en totalité dans le champ principal, ou la zone (ZTj).

En vue d'atteindre un degré d'automatisation élevé, le procédé peut consister, lors de la programmation de chaque robot (R1, R2, ..., Ri) avec des consignes et/ou des séquences de commandes préalablement au démarrage du travail dans la parcelle (P), à définir également pour chaque robot les caractéristiques des marches arrière susceptibles d'être effectuées dans un contexte de situation d'attente, notamment leur ampleur et le type de leur trajectoire, à savoir une trajectoire en marche arrière confondue ou décalée avec la trajectoire en marche avant immédiatement antérieure réalisée pour terminer le rang (RA).

En accord avec l'invention, et pour permettre le traitement d'une grande variété de cas possibles, les conditions ou causes possibles d'une situation d'attente pour un robot (Ri) donné d'une flotte sont préférentiellement multiples et sont, par exemple, liées au robot (Ri) concerné lui-même, à l'organisation de la flotte, au déroulement et à l'état du travail de la parcelle (P) et /ou à des instructions provenant du système central commun de planification, de gestion et de pilotage (SC) ou d'un opérateur.

Ainsi pour un robot (Ri) donné (i=1 sur les figures 4), il est possible de prévoir comme conditions d'attente en fin de rang (RA), entrainant l'application du principe de l'invention (en présence d'une fourrière), par exemple les circonstances suivantes :
- Ri attend un ordre venant de l'utilisateur (ou du système SC de supervision) qui doit l'envoyer vers une station de ravitaillement ou vers une zone de parking (généralement situées chacune à un endroit prédéfini de la fourrière).
- Ri a fini la tâche qui lui a été attribuée et attend que la mission soit totalement finie (c'est-à-dire que tous les robots aient finis leurs tâches) avant de retourner à sa zone de parking en dehors du champ principal.
- La logique de gestion des priorités de passage a défini qu'un autre robot Rj (j=2 sur les figures 4) avait la priorité de passage sur Ri et Ri recule pour ne pas former un obstacle inutile dans la fourrière (arrêt temporaire dans le rang pour Ri).
- Un défaut a été détecté sur Ri (et/ou l'un de ses outils O ou O') qui nécessite un arrêt non-immédiat. Le robot Ri termine alors son rang et attend à la fin de celui-ci que le problème soit résolu pour reprendre son travail.

L'invention concerne également un ensemble agricole pour la mise en œuvre du procédé de travail automatisé de parcelles agricoles (P) tel que décrit ci-dessus.

Cet ensemble comprend, d'une part, une flotte d'au moins deux robots agricoles (R1, R2, ..., Ri) mobiles, à fonctionnement autonome et mutuellement indépendants, et dont chacun est équipé d'au moins un outil (O) de travail adéquat disposé à l'arrière selon la direction d'avance (AV), et, d'autre part, un système central commun de planification, de gestion et de pilotage (SC) apte et destiné à évaluer et à planifier le travail à réaliser sur une parcelle (P) considérée et à communiquer avec lesdits robots en vue de leur transmettre des consignes et/ou des commandes, et éventuellement à recevoir en retour des informations de fonctionnement et/ou d'état desdits robots (R1, R2, ..., Ri), ce avant le début et, si nécessaire, au cours du travail de la parcelle (P) considérée, chaque robot (R1, R2, ..., Ri) étant en outre pourvu d'un dispositif de localisation et, éventuellement, muni de moyens de mesure de ses réserves d'intrants et de de son autonomie en fonction de sa consommation actuelle et future estimée.

Cet ensemble est caractérisé en ce chaque robot (R1, R2, ..., Ri) est configuré et programmé pour effectuer, lorsqu'il se retrouve en situation d'attente, une suite prédéterminée d'actions telles que mentionnées ci-dessus.

Bien entendu, l'invention n'est pas limitée au mode de réalisation décrit et représenté aux dessins annexés. Des modifications des modes de réalisations restent possibles, notamment du point de vue de la constitution des divers éléments ou par substitution d'équivalents techniques, tant que le domaine de protection de l'invention décrit par les revendications indépendantes 1 et 11 est respecté.

## Revendications

1. Procédé de travail d'une parcelle (P) par l'intermédiaire d'une flotte d'au moins deux robots agricoles (R1, R2, ..., Ri) à fonctionnement autonome et mutuellement indépendants, et dont chacun est équipé d'au moins un outil (O) disposé à l'arrière selon la direction d'avance (AV), la flotte opérant sous le contrôle d'un système central commun de planification, de gestion et de pilotage (SC), la parcelle (P) comportant au moins une zone de fourrière (ZF) associée à et bordant au moins une partie d'un côté du champ principal (CP), le procédé consistant, préalablement au début, et éventuellement durant l'avancement du travail dans la parcelle (P), et après évaluation et planification préalables du travail à réaliser sur la parcelle (P) considérée, à programmer automatiquement et/ou manuellement chaque robot (R1, R2, ..., Ri) avec des consignes, des paramétrages et/ou des séquences de commandes avant le démarrage du travail dans la parcelle (P), comprenant notamment des trajectoires de déplacement pour chacun d'entre eux, procédé qui
consiste, pour un robot (Ri) concerné arrivant en fin de rang, et susceptible de se retrouver dans une situation d'attente, à continuer et à achever le travail en cours dans le champ principal (CP) dans son rang (RA) courant, en amenant son ou ses outil(s) (O) jusqu'à la fin du rang (RA) et donc jusqu'à la partie bord (EZ) concernée du champ principal (CP), ce en débordant dans la partie (PF) de fourrière attenante à cette partie de bord (EZ), puis à effectuer un déplacement en marche arrière dans le champ principal (CP), ce au moins jusqu'à ce que le robot (Ri) et son(ses) outil(s) (O) soient à nouveau situés en totalité dans le champ principal (CP), à demeurer en place jusqu'à ce que les conditions ou la cause de la situation d'attente ai(ent) disparu et ensuite à reprendre la suite de son travail dans la parcelle (P).

2. Procédé selon la revendication 1, **caractérisé en ce que** la réalisation des conditions ou l'existence d'une cause entraînant une situation d'attente pour un robot (Ri) donné est vérifiée par ce même robot (Ri) lorsqu'il arrive en fin du rang en cours et approche d'une partie de fourrière (PF) attenante, et **en ce que** l'exécution consécutive par ce robot (Ri) d'actions en relation avec une situation d'attente avérée est tributaire de contrôles de sécurité préalables effectués par ce robot (Ri).

3. Procédé selon la revendication 1 ou 2, **caractérisé en ce que** l'existence d'une situation d'attente pour un robot (Ri) donné est signalée à ce dernier par le système central commun de planification, de gestion et de pilotage (SC).

4. Procédé selon l'une quelconque des revendications 1 à 3, **caractérisé en ce que** le déplacement en marche arrière du robot (Ri) concerné emprunte, en sens inverse, la même trajectoire que celle empruntée pour achever le travail en fin de son rang (RA) courant.

5. Procédé selon l'une quelconque des revendications 1 à 3, **caractérisé en ce que** le déplacement en marche arrière du robot (Ri) concerné emprunte une trajectoire différente de celle empruntée pour achever le travail en fin de son rang (RA) courant, préférentiellement décalée latéralement au moins de la largeur de la trace d'un moyen de roulement dudit robot.

6. Procédé selon l'une quelconque des revendications 1 à 5, **caractérisé en ce que** le au moins un outil (O) est inactivé, le cas échéant soulevé, lors du déplacement en marche arrière du robot (Ri) concerné.

7. Procédé selon l'une quelconque des revendications 1 à 6, **caractérisé en ce qu'**il consiste également préalablement au démarrage du travail dans la parcelle (P), et éventuellement durant l'avancement du travail dans la parcelle (P), à subdiviser le champ principal (CP) en zones de travail (ZT1, ZT2, ..., ZTj) en forme de bandes, dont au moins une extrémité, qui correspond à une partie de bord (EZ) du champ principal (CP), se prolonge par une partie (PF) de la ou d'une des zone(s) de fourrière (ZF), et dont chacune est attribuée à un des robots (R1, R2, ..., Ri) pour être travaillée par lui selon sa direction longitudinale en un ou plusieurs passage(s) ou rang(s), avantageusement en au moins un trajet aller-retour,

8. Procédé selon l'une quelconque des revendications 1 à 7, **caractérisé en ce qu'**il consiste, lorsque le robot (Ri) concerné comporte également au moins un outil (O') disposé à l'avant, d'effectuer le déplacement en marche arrière dans le champ principal (CP), le cas échéant dans la zone de travail (ZTj) considérée, au moins jusqu'à ce que le au moins un outil (O') disposé à l'avant soit situé en totalité dans le champ principal, ou la zone (ZTj).

9. Procédé selon l'une quelconque des revendications 1 à 8, **caractérisé en ce qu'**il consiste, lors de la programmation de chaque robot (R1, R2, ..., Ri) avec des consignes et/ou des séquences de commandes préalablement au démarrage du travail dans la parcelle (P), à définir également pour chaque robot les caractéristiques des marches arrière susceptibles d'être effectuées dans un contexte de situation d'attente, notamment leur ampleur et le type de leur trajectoire, à savoir une trajectoire en marche arrière confondue ou décalée avec la trajectoire en marche avant immédiatement antérieure réalisée pour terminer le rang (RA).

10. Procédé selon l'une quelconque des revendications 1 à 9, **caractérisé en ce que** les conditions ou causes possibles d'une situation d'attente pour un robot (Ri) donné d'une flotte sont multiples et sont, par exemple, liées au robot (Ri) concerné lui-même, à l'organisation de la flotte, au déroulement et à l'état du travail de la parcelle (P) et /ou à des instructions provenant du système central commun de planification, de gestion et de pilotage (SC) ou d'un opérateur.

11. Ensemble agricole pour la mise en œuvre du procédé de travail automatisé de parcelles agricoles (P) selon l'une quelconque des revendications 1 à 10, cet ensemble comprenant, d'une part, une flotte d'au moins deux robots agricoles (R1, R2, ..., Ri) mobiles, à fonctionnement autonome et mutuellement indépendants, et dont chacun est équipé d'au moins un outil (O) de travail adéquat disposé à l'arrière selon la direction d'avance (AV), et, d'autre part, un système central commun de planification, de gestion et de pilotage (SC) apte et destiné à évaluer et à planifier le travail à réaliser sur une parcelle (P) considérée et à communiquer avec les robots en vue de leur transmettre des consignes et/ou des commandes, et éventuellement à recevoir en retour des informations de fonctionnement et/ou d'état desdits robots (R1, R2, ..., Ri), ce avant le début et, si nécessaire, au cours du travail de la parcelle (P) considérée, chaque robot (R1, R2, ..., Ri) étant en outre pourvu d'un dispositif de localisation et, éventuellement, muni de moyens de mesure de ses réserves d'intrants et de son autonomie en fonction de sa consommation actuelle et future estimée,
ensemble caractérisé en ce chaque robot (R1, R2, ..., Ri) est configuré et programmé pour effectuer, lorsqu'il se retrouve en situation d'attente, une suite prédéterminée d'actions telles que ressortant des revendications 1 à 10.

## Patentansprüche

1. Verfahren zur Bearbeitung einer Parzelle (P) mittels einer Flotte von mindestens zwei landwirtschaftlichen Robotern (R1, R2, ..., Ri), die autonom und voneinander unabhängig arbeiten und von denen jeder mit mindestens einem in Vorwärtsrichtung (AV) nach hinten angeordneten Werkzeug (O) ausgestattet ist, wobei die Flotte unter der Kontrolle eines gemeinsamen zentralen Planungs-, Verwaltungs- und Steuerungssystems (SC) arbeitet, die Parzelle (P) umfasst mindestens einen Vorgewendebereich (ZF), der mindestens einem Teil einer Seite des Hauptfeldes (CP) zugeordnet ist und an dieses angrenzt, wobei das Verfahren darin besteht, vor Beginn und gegebenenfalls während der Durchführung der Arbeiten auf der Parzelle (P) sowie nach vorheriger Bewertung und Planung der auf der betreffenden Parzelle (P) auszuführenden Arbeiten jeden Roboter (R1, R2, ..., Ri) vor Beginn der Arbeiten auf der Parzelle (P) automatisch und/oder manuell mit Vorgaben, Einstellungen und/oder Befehlssequenzen zu programmieren, die insbesondere Bewegungsbahnen für jeden einzelnen von ihnen umfassen, Verfahren, das darin besteht, dass ein betroffener Roboter (Ri), der das Ende seiner Reihe erreicht und sich möglicherweise in einer Wartezustand befindet, die laufende Arbeit im Hauptfeld (CP) in seiner aktuellen Reihe (RA) fortsetzt und abschließt, indem er sein(e) Werkzeug(e) (O) bis zum Ende der Reihe (RA) und somit bis zum betreffenden Randbereich (EZ) des Hauptfeldes (CP) zu bewegen, wobei er in den an diesen Randbereich (EZ) angrenzenden Vorgewendeabschnitt (PF) übergreift, und anschließend eine Rückwärtsbewegung im Hauptfeld (CP) durchzuführen, und zwar zumindest so lange, bis sich der Roboter (Ri) und sein(e) Werkzeug(e) (O) wieder vollständig im Hauptfeld (CP) befinden, an Ort und Stelle zu verharren, bis die Bedingungen oder die Ursache für die Wartezustand beseitigt sind, und anschließend die Arbeit auf der Parzelle (P) fortzusetzen.

2. Verfahren nach Anspruch 1, **dadurch gekennzeichnet, dass** das Eintreten der Bedingungen oder das Vorliegen einer Ursache, die zu einer Wartezustand für einen Roboter (Ri) durch diesen Roboter (Ri) selbst überprüft wird, wenn er das Ende der aktuellen Reihe erreicht und sich einem angrenzenden Vorgewendeabschnitt (PF) nähert, und dass die anschließende Ausführung von Aktionen durch diesen Roboter (Ri) im Zusammenhang mit einer festgestellten Wartezustand von vorherigen Sicherheitskontrollen abhängt, die von diesem Roboter (Ri) durchgeführt werden.

3. Verfahren nach Anspruch 1 oder 2, **dadurch gekennzeichnet, dass** das Vorliegen einer Wartezustand für einen bestimmten Roboter (Ri) diesem durch das gemeinsame zentrale Planungs-, Verwaltungs- und Steuerungssystem (SC) gemeldet wird.

4. Verfahren nach einem der Ansprüche 1 bis 3, **dadurch gekennzeichnet, dass** die Rückwärtsbewegung des betreffenden Roboters (Ri) in umgekehrter Richtung dieselbe Bahn zurücklegt wie die, die er zum Abschluss der Arbeit am Ende seiner aktuellen Reihe (RA) genommen hat.

5. Verfahren nach einem der Ansprüche 1 bis 3, **dadurch gekennzeichnet, dass** die Rückwärtsbewegung des betreffenden Roboters (Ri) einer anderen Bahn folgt als derjenigen, die zum Abschluss der Arbeit am Ende seiner aktuellen Reihe (RA) zurückgelegt wird, vorzugsweise seitlich um mindestens die Spurbreite eines Laufwerks des Roboters versetzt.

6. Verfahren nach einem der Ansprüche 1 bis 5, **dadurch gekennzeichnet, dass** das mindestens ein Werkzeug (O) bei der Rückwärtsbewegung des betreffenden Roboters (Ri) deaktiviert, gegebenenfalls angehoben wird.

7. Verfahren nach einem der Ansprüche 1 bis 6, **dadurch gekennzeichnet, dass** es vor Beginn der Arbeiten auf der Parzelle (P) und gegebenenfalls während des Fortschreitens der Arbeiten auf der Parzelle (P) darin besteht, das Hauptfeld (CP) in streifenförmige Arbeitsbereiche (ZT1, ZT2, ..., ZTj) in Form von Streifen zu unterteilen, von denen sich mindestens ein Ende, das einem Randabschnitt (EZ) des Hauptfeldes (CP) entspricht, in einen Abschnitt (PF) des oder eines der Vorgewendebereiche (ZF) fortsetzt, und von denen jede einem der Roboter (R1, R2, ..., Ri) zugeordnet ist, um von diesem in seiner Längsrichtung in einem oder mehreren Durchgängen oder Reihen bearbeitet zu werden, vorzugsweise in mindestens einer Hin- und Rückfahrt,

8. Verfahren nach einem der Ansprüche 1 bis 7, **dadurch gekennzeichnet, dass** es darin besteht, wenn der betreffende Roboter (Ri) zudem mindestens ein vorne angeordnetes Werkzeug (O') aufweist, die Rückwärtsbewegung im Hauptfeld durchzuführen, gegebenenfalls in dem betreffenden Arbeitsbereich (ZTj), zumindest so lange, bis sich das mindestens ein vorne angeordnetes Werkzeug (O') vollständig im Hauptfeld oder im Arbeitsbereich (ZTj) befindet.

9. Verfahren nach einem der Ansprüche 1 bis 8, **dadurch gekennzeichnet, dass** es darin besteht, bei der Programmierung jedes Roboters (R1, R2, ..., Ri) mit Anweisungen und/oder Befehlssequenzen vor Beginn der Arbeit auf der Parzelle (P), für jeden Roboter auch die Merkmale der Rückwärtsfahrten zu definieren, die in einer Wartezustand durchgeführt werden können, insbesondere deren Ausmaß und die Art ihrer Bahn, nämlich eine Rückwärtsbahn, die mit der unmittelbar zuvor zur Beendigung der Reihe (RA) durchgeführten Vorwärtsbahn zusammenfällt oder versetzt ist.

10. Verfahren nach einem der Ansprüche 1 bis 9, **dadurch gekennzeichnet, dass** die möglichen Bedingungen oder Ursachen für eine Wartezustand eines Roboters (Ri) einer Flotte vielfältig sind und beispielsweise mit dem betreffenden Roboter (Ri) selbst, der Organisation der Flotte, dem Ablauf und dem Stand der Arbeiten auf der Parzelle (P) und/oder mit Anweisungen aus dem gemeinsamen zentralen Planungs-, Verwaltungs- und Steuerungssystem (SC) oder einem Bediener zusammenhängen.

11. Landwirtschaftliche Anlage zur Durchführung des automatisierten Bearbeitungsverfahrens für landwirtschaftliche Parzellen (P) gemäß einem der Ansprüche 1 bis 10, wobei diese Anlage einerseits eine Flotte von mindestens zwei landwirtschaftlichen Robotern (R1, R2, ..., Ri) umfasst, die mobil, autonom und voneinander unabhängig sind und von denen jeder mit mindestens einem geeigneten Arbeitsgerät (O) ausgestattet ist, das in Fahrtrichtung (AV) hinten angeordnet ist, und andererseits ein gemeinsames zentrales Planungs-, Verwaltungs- und Steuerungssystem (SC) umfasst, das dazu geeignet und bestimmt ist, die auf einer bestimmten Parzelle (P) auszuführenden Arbeiten zu bewerten und zu planen sowie mit den Robotern zu kommunizieren, um ihnen Anweisungen und/oder Befehle zu übermitteln und gegebenenfalls Betriebs- und/oder Statusinformationen dieser Roboter (R1, R2, ..., Ri) zu empfangen, und zwar vor Beginn und, falls erforderlich, während der Arbeiten auf der betreffenden Parzelle (P), wobei jeder Roboter (R1, R2, ..., Ri) zudem mit einer Ortungsvorrichtung und gegebenenfalls mit Mitteln zur Messung seiner Inputreserven und seiner Autonomie in Abhängigkeit von seinem aktuellen und geschätzten zukünftigen Verbrauch ausgestattet ist,
Anlage, **dadurch gekennzeichnet, dass** jeder Roboter (R1, R2, ..., Ri) so konfiguriert und programmiert ist, dass er, wenn er sich in einer Wartezustand befindet, eine vorbestimmte Abfolge von Handlungen ausführt, wie sie aus den Ansprüchen 1 bis 10 hervorgeht.

## Claims

1. Method for working a plot of land (P) by a fleet of at least two autonomously operating and mutually independent agricultural robots (R1, R2, ..., Ri), each of which is equipped with at least one rear-mounted tool (O) in the direction of advance (AV), the fleet operating under the control of a central common planning, management and drive system (SC), the plot (P) comprising at least one headland zone (ZF) associated with and bordering at least part of one side of the main field (CP), the method consisting, prior to the start of, and if necessary during the progress of the work in the plot (P), and after prior evaluation and planning of the work to be carried out on the plot (P) in question, in automatically and/or manually programming each robot (R1, R2, ..., Ri) with instructions, settings and/or control sequences before starting work in the plot (P), including in particular movement trajectories for each robot,
method **characterised in that** it consists, for one robot (Ri) in question arriving at the end of a row (RA), and likely to find itself in a waiting situation, of continuing and completing the work in progress in the main field (CP) in its current row (RA), by bringing its tool(s) (O) to the end of the row (RA) and therefore to the edge portion (EZ) in question of the main field (CP), encroaching on the headland portion (PF) adjoining this edge portion (EZ), then in moving backwards in the main field (CP), at least until the robot (Ri) and its tool(s) (O) are once again located entirely in the main field (CP), in remaining in place until the conditions or cause of the waiting situation has/have disappeared, and then in resuming the rest of its work on the plot (P).

2. Method according to claim 1, **characterised in that** the fulfilment of the conditions or the existence of a cause leading to a waiting situation for a given robot (Ri) is verified by this same robot (Ri) when it reaches the end of the current row and approaches an adjoining headland portion (PF), and **in that** the subsequent execution by this robot (Ri) of actions in relation to a proven waiting situation is dependent on prior safety checks carried out by this robot (Ri).

3. Method according to claim 1 or 2, **characterised in that** a given robot (Ri) is informed of the existence of a waiting situation by the central common planning, management and drive system (SC).

4. Method according to any one of claims 1 to 3, **characterised in that** the reverse movement of the robot (Ri) in question takes the same trajectory as the one taken to complete the work at the end of its current row (RA), in the opposite direction.

5. Method according to any one of claims 1 to 3, **characterised in that** the reverse movement of the robot (Ri) in question follows a different trajectory to that taken to complete the work at the end of its current row (RA), preferably laterally offset by at least the width of the track of a means of moving said robot.

6. Method according to any one of claims 1 to 5, **characterised in that** the at least one tool (O) is inactive, and raised if necessary, when the robot (Ri) in question moves backwards.

7. Method according to any one of claims 1 to 6, **characterised in that** it also consists, prior to the start of work in the plot (P) and if necessary during the progress of the work in the plot (P), in sub-dividing the main field (CP) into work zones (ZT1, ZT2, ..., ZTj) in the form of strips, at least one end of which, corresponding to an edge portion (EZ) of the main field (CP), extends by a portion (PF) of the or of one of the headland zone(s) (ZF), and each of which is assigned to one of the robots (R1, R2, ..., Ri) to be worked by it in its longitudinal direction in one or more pass(es) or row(s), advantageously in at least one round trip,

8. Method according to any one of claims 1 to 7, **characterised in that** it consists, if the robot (Ri) in question also has at least one front-mounted tool (O'), in moving backwards in the main field (CP), if necessary in the work zone (ZTj) in question, at least until the at least one front-mounted tool (O') is located entirely within the main field, or the zone (ZTj).

9. Method according to any one of claims 1 to 8, **characterised in that** it consists, when programming each robot (R1, R2, ..., Ri) with instructions and/or control sequences prior to starting work in the plot (P), in also defining for each robot the features of the reversing operations that may be carried out in a waiting situation, in particular their extent and the type of their trajectory, namely a reversing trajectory that is coincident with or offset from the immediately preceding forward trajectory used to finish the row (RA).

10. Method according to any one of claims 1 to 9, **characterised in that** the possible conditions or causes of a waiting situation for a given robot (Ri) in a fleet are multiple and are, for example, linked to the robot (Ri) in question itself, to the organization of the fleet, to the progress and state of work in the plot (P) and/or to instructions from the central common planning, management and drive system (SC) or from an operator.

11. Agricultural machinery assembly for the implementation of the automated method of working plots of land (P) according to any one of claims 1 to 10, this assembly comprising firstly a fleet of at least two autonomously operating and mutually independent mobile agricultural robots (R1, R2, ..., Ri), each of which is equipped with at least one suitable work tool (O) mounted at the rear in the direction of advance (AV), and secondly a central common planning, management and drive system (SC) capable of and intended to evaluate and plan the work to be carried out on a plot (P) in question and to communicate with the robots in order to send them instructions and/or control orders, and if necessary receive in return operating and/or status information from said robots (R1, R2, ..., Ri), prior to the start of and if necessary during the work on the plot (P) in question, each robot (R1, R2, ..., Ri) furthermore being provided with a positioning device and, possibly, provided with input stock and autonomy measuring means based on its current and estimated future consumption,
assembly **characterised in that** each robot (R1, R2, ..., Ri) is configured and programmed to perform a predetermined sequence of actions as mentioned in claims 1 to 10 when it finds itself in a waiting situation.
